# EUROPEAN PATENT SPECIFICATION

(11) **EP 3 866 946 B1**
(45) Date of publication and mention of the grant of the patent: **22.05.2024**
(21) Application number: 19802258.4
(22) Date of filing: 18.10.2019
(51) Int. Cl.: B01D 35/06, B01D 35/153, B01D 35/16, B01D 29/35

(54) **FILTERING DEVICE ESPECIALLY FOR HEATING SYSTEMS**
FILTRIERUNGSVORRICHTUNG INSBESONDERE FÜR HEIZUNGSSYSTEME
DISPOSITIF DE FILTRAGE NOTAMMENT POUR SYSTÈMES DE CHAUFFAGE

(30) Priority: 18.10.2018 IT 201800009582
(43) Date of publication of application: 25.08.2021
(73) Proprietor: HCE S.r.l., 25060 Cellatica (BS) (IT)
(72) Inventor: INGLESE, Enrico, 25128 Brescia (IT); LODA, Alessandro, 25128 Brescia (IT)
(74) Representative: De Sandre, Emanuele
(86) International application number: PCT/IB2019/058898
(87) International publication number: WO 2020/079657

(56) References cited:
- WO-A1-2018/073738
- DE-U1- 29 720 121
- FR-A1- 2 791 904
- US-A1- 2017 240 440

## Description

The present invention relates to a filtering device especially for hydraulic heating systems.

The present filtering device is especially designed to be installed along a pipe of a hydraulic heating system so that the fluid carried by the pipe passes through the filtering device.

In the specific technical sector it is known to perform the installation of at least one filtering device in heating systems.

A filtering device known hitherto, as the one disclosed in patent application FR2791904A1, comprises an internal space which communicates with an inlet opening and with an outlet opening.

From a hydraulic point of view, between the inlet opening and the outlet opening there are two chambers, a first chamber shaped to produce a cyclonic movement of the fluid, so as to separate any heavy particles from the liquid, as a result of the centrifugal effect, and a second chamber, downstream of the first chamber, inside which a magnetic element and a mesh filter are housed, these being intended to perform, respectively, the separation of magnetically reactive particles and the mechanical filtration of the liquid.

This conventional filtering device has two drawbacks.

A first drawback consists in the fact that, during operation, the accumulation of particles on the surface of the magnetic element causes a reduction in the free cross-section for the through-flow of the liquid, resulting in a diminished hydraulic performance of the filter and therefore of the system.

A second drawback is the difficulty of performing maintenance.

In fact, in order to clean the filter, namely remove any particulate matter which has accumulated inside the second chamber owing to action mainly of the mesh filter, but also as a result of the action of the magnetic element, the filtering device must be opened and the second chamber physically accessed.

To achieve this, the pipe along which the filter is installed must be interrupted or the filter itself bypassed.

The problem underlying the present invention is therefore that of making a filtering device more efficient and simplifying the maintenance thereof.

The task of the present invention is therefore that of solving this problem by proposing a filtering device which does not adversely affect significantly the hydraulic efficiency of a hydraulic system comprising such a device and the maintenance of which is simpler than that of the known filtering devices.

In the context of this task, one object of the invention is that of allowing removal of the particulate matter which has accumulated inside the filtering device without the need to interrupt the pipe along which the filtering device is installed or bypass the device itself.

A further object of the invention is that of providing a filtering device which allows easy removal of the particulate matter intercepted by the mesh filter, without necessarily requiring opening of the filtering device.

This task as well as these and other objects which will appear more clearly below are achieved by a filtering device according to the attached independent claim.

Detailed characteristic features of a filtering device according to the invention are contained in the dependent claims.

Further characteristic features and advantages of the invention will emerge more clearly from the description of at least one preferred, but not exclusive embodiment of a filtering device illustrated by way of a non-limiting example in the attached sets of drawings in which:
- Figure 1 shows a cross-section through a filtering device according to the present invention;
- Figure 2 shows the filtering device according to Figure 1 with the magnetic member removed;
- Figure 3 shows an enlarged view of a detail according to Figure 2;
- Figure 4 shows the filtering device according to the preceding figures in a possible variation of use thereof.

With particular reference to the said figures, 10 denotes overall a filtering device with a casing 11 which defines a through-flow space 12 for a liquid to be filtered and is provided with at least two connectors 13, 14a, 14b for connection to a pipe, designed to place the latter in fluid communication with the space 12.

The filtering device 10 generally may have only two connectors or, in order to allow two possible installation configurations, may comprise a first connector 13 and a two second connectors 14a and 14b which may extend from the casing 11 in two directions A and B which are not parallel.

In this way, the filtering device may, in a first configuration, be connected to a pipe with the first connector 13 and with a first one 14a of the second connectors 14a and 14b or, in a second configuration, with the second one 14b - instead of with the first one 14a - of the second connectors 14a and 14b.

For example, the direction A of the first one 14a of the second connectors 14a and 14b may be parallel to and preferably coincides with the direction of extension of the first connector C.

The direction B of the second one 14b of the second connectors 14a and 14b may be at an angle or preferably perpendicular with respect to the direction of extension of the first connector C.

In this case, in the first configuration, it will be possible to install the filtering device in a system using a configuration which is in-line with the pipe or, in the second configuration, using an L-shaped configuration, connecting it to two pipe sections so as to form an L.

Generally, a first faucet 100, which can be operated so as to prevent the flow of fluid through the second connector 14a or 14b to which it is fixed, may be associated with the connector of the second connectors 14a or 14b which will be connected to the pipe.

The filtering device may form part of a kit which comprises the first faucet 100, or the first faucet may be fixed to the second connector, or incorporated in the latter, if the filtering device comprises a single second connector.

Or else, it may be fixed to both the second connectors, or incorporated in the latter, in the case where the filtering device comprises two second connectors, depending on the particular implementation requirements of the present invention.

The space 12 comprises a magnetic filtering chamber 15 which communicates with the first one 13 of the connectors 13, 14a 14b, and a mechanical filtering chamber 16 which communicates with a second one 14a and 14b of the connectors 13, 14a 14b and which has a through-flow opening 17 communicating with the magnetic filtering chamber 15 so that a that fluid crosses the space 12, entering via the first one 13 of the connectors 13, 14a 14b and flowing out from the second one 14a or 14b of the connectors 13, 14a 14b, or, vice versa, crosses in succession both the chambers 15 and 16.

The mechanical filtering chamber 15 has a magnetic member 18 which extends, with its operating end 19, towards the through-flow opening 17.

The magnetic member 18, in a manner conventional per se, is designed to emit a magnetic field inside the filtering chamber so as to attract magnetically reactive particles which may be conveyed by a fluid flow which crosses the magnetic filtering chamber 16.

The mechanical filtering chamber 16 houses a mesh filter 20 which divides it up into a first part 16a, communicating with the through-flow opening 17, and a second part 16b, which communicates with the second connector 14a and 14b so that a fluid flow passing between the through-flow opening 17 and the second connector 14a or 14b is forced to cross the mesh filter 20.

"Mesh filter 20" is understood as meaning a filter actually formed by or comprising a mesh, for example a preferably stainless metal mesh, or a filter formed by a finely perforated body, such as a thin plate provided with a plurality of holes which may be distributed substantially homogeneously over its length.

The operating end 19 is arranged spaced from the through-flow opening 17 so that an accumulation of particulate mater on the operating end 19 does not hinder the through-flow of liquid from the magnetic filtering chamber 15 to the mechanical filtering chamber 16, across the through-flow opening 17.

For example, along a direction D parallel to the extension of the through-flow opening 17, the operating end 19 of the magnetic member 18 may be arranged spaced at a distance d from the through-flow opening 17.

Said distance d may be for example between 1 cm and 3 cm and is preferably equal to 1.5 cm.

In this way it ensured that, during use of the filtering device 10, the accumulation of magnetically reactive particulate matter attracted by the magnetic member 18 does not cause an obstruction of the through-flow opening 17 or a reduction in the free aperture thereof such as to negatively affect the hydraulic efficiency of the filtering device 10.

The magnetic filtering chamber 15 has a bottom wall 21 and a discharge duct 22 which faces the bottom wall 21, where the magnetic member 18 extends between the bottom wall 21 and the operating end 19 towards the through-flow opening 17.

The discharge duct 22 may be provided with - or fixed to - a second faucet 200 which can be opened in order to discharge liquid from the magnetic filtering chamber 15.

The discharge duct 22 extends along a direction G which may be substantially parallel to the direction A of the first one 14a of the second connectors 14a or 14b so as to favour always access to the discharge duct 22 when the filtering device 10 is installed, in particular in a boiler.

The casing 11 may be formed by two shells 11a and 11b which complement each other and can be joined together by means of a connection which may be for example of the bayonet or threaded type.

With reference to the attached figures, the aforementioned connection consists for example of a threaded connection 11c.

Seals may be provided in order to ensure sealing of the threaded connection 11c.

The threaded connection 11c may be such that the thread of the top shell 11a and the thread of the bottom shell 11b are staggered so that, when the shells 11a and 11b are fixed together, the direction G of the discharge duct 22 will be substantially parallel to the direction A of the first one 14a of the second connectors 14a and 14b.

The second part 16b of the mechanical filtering chamber 16 has a discharge outlet 23.

The filtering device 10 comprises means for closing the discharge outlet 23 which are configured so that they can be operated from the outside of the filtering device 10 in order to open or close the discharge outlet 23.

The filtering device 10 is configured so that, following opening of the discharge outlet 23, the latter is connected to the magnetic filtering chamber 15 so as to discharge into the latter material which has accumulated - during use of the filtering device 10 - inside the second part 16b of the mechanical filtering chamber 16 following filtering by the mesh filter 20.

In detail the casing 11 may comprise a tubular collar 24 which projects into the space 12.

The mesh filter 20 may be configured and positioned inside the mechanical filtering chamber 16 so as to define between it and the tubular collar 24 a cavity 25 which has a bottom opening which defines the discharge outlet 23.

In this case, the second part 16b of the mechanical filtering chamber 16 will comprise the cavity 25.

The said closing means may comprise a blocking member 26 which is movable between a closed configuration, where it blocks off the discharge outlet 23, and an open configuration in which the discharge outlet 23 is open so as to connect the cavity 25 to the magnetic filtering chamber 15.

The blocking member may be provided with a hole or, in general, configured so as to allow the flow of liquid between the magnetic filtering chamber 15 and the first part 16a of the mechanical filtering chamber 15.

The collar 24 may be shaped externally so as to induce in a liquid entering into the magnetic filtering chamber 15 a cyclonic progression towards the bottom wall 21.

In this way separation and deposition of the particulate matter will be obtained by means of the centrifugal effect in a manner known per se and not further described.

If the liquid enters through the first connector 13, the filtering device 10 may be configured so that the liquid, once the bottom wall 21 is reached, is directed towards the through-flow opening 17 so as to access the mechanical filtering chamber 16, flowing along the magnetic member 18.

The collar 24 may extend along a direction of extension E and the magnetic member 18 may extend along an operating direction F which preferably is substantially parallel to the direction of extension E.

The filtering device 10 is configured to be fixed to a pipe of a hydraulic system so that the direction of extension E is substantially vertical, the filtering device 10 being configured moreover in such a way that the particulate matter which has accumulated inside the cavity 25 can be discharged, by means of gravity, through the discharge outlet 23 following opening of the latter, namely the discharge opening 23 will be configured so that, when the direction of extension E is substantially vertical, it extends at least partly vertically.

However, the filtering device 10 is configured so as to ensure that it remains functional even when it is fixed to a pipe of a hydraulic system such that the direction of extension E is substantially horizontal.

The casing 11 may comprise a - preferably tubular - sleeve 27 which projects inside the magnetic filtering chamber 15 and defines a housing 28 for the mechanical member 18.

The housing 28 will preferably be open on the outside of the casing 11 so as to allow the insertion and the extraction of the magnetic member 18, without this extraction interfering with the operation of the filtering device 10.

During use, the magnetic member 18 may be housed inside the sleeve 27 in order to attract and retain on the latter magnetically reactive particles.

The magnetic member 18 may preferably be able to be extracted from the sleeve 27 in order to free said particles.

The magnetic member 18 may comprise a cartridge-like shell 29 containing a permanent magnet or a plurality of permanent magnets.

The cartridge-like shell 29 may have a substantially cylindrical shape and have a bottom end 29a configured to be joined stably and reversibly together with a mouth 28a of the housing 28.

The magnetic member 18 and the sleeve 27 may be configured to be joined together stably and reversibly so as to selectively lock the magnetic member 18 inside the sleeve 27 or release it and allow it to be extracted from the sleeve 27.

For example, the bottom end 29a and the mouth 28a may be threaded in a complementary manner and/or each comprise a circular recess so that when the bottom end 29a and the mouth 28a are joined together said recesses form a seat for an elastic ring, for example an O-ring. In this case one of the recesses will be engaged by the elastic ring so as to allow the snap-engagement of the bottom end 29a with the mouth 28a.

The magnetic filtering chamber 15 may be internally cylindrical and the sleeve 27 may have a cylindrical outer surface coaxial with the magnetic filtering chamber 15.

This solution will be particularly advantageous for optimizing the separation performance due to the cyclonic action, as mentioned above, in the embodiments of the present invention for which it is intended.

The sleeve 27 may extend from the bottom wall 21 towards the through-flow opening 17 where said closing means may comprise a slider 30 connected to the sleeve 27 movably between a first configuration and a second configuration.

The slider 30 may emerge inside the sleeve 27, as for example is visible in the attached figures, so as to be operated by means of the magnetic member 18.

The sleeve 27, the slider 30 and the magnetic member 18 may be configured so that, following insertion of the magnetic member 18 inside the sleeve 27, the slider 30 will be arranged in the first configuration, for example because it has been pushed by the operating end 19 of the magnetic member 18 and, following extraction of the magnetic member 18 from the sleeve 27, the slider 30 will be arranged in the second configuration.

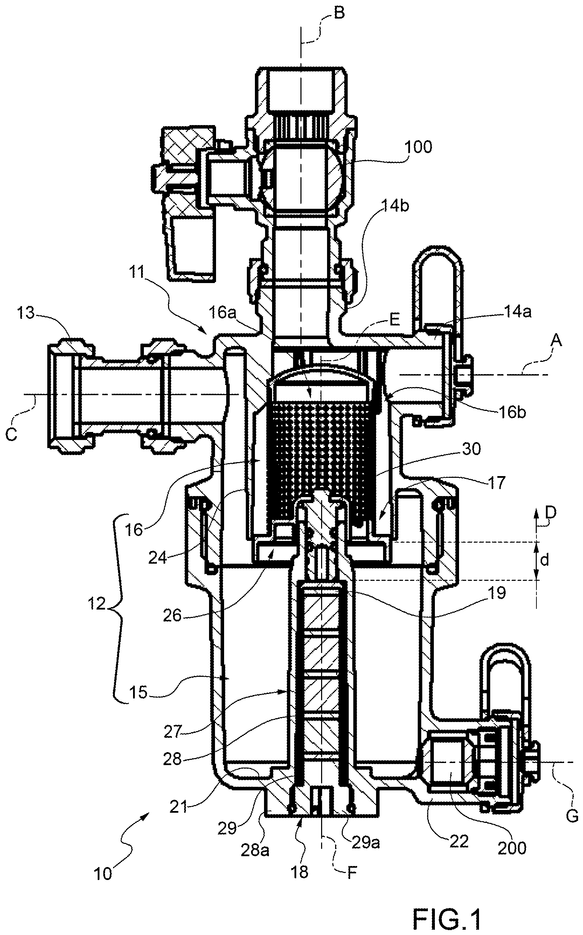

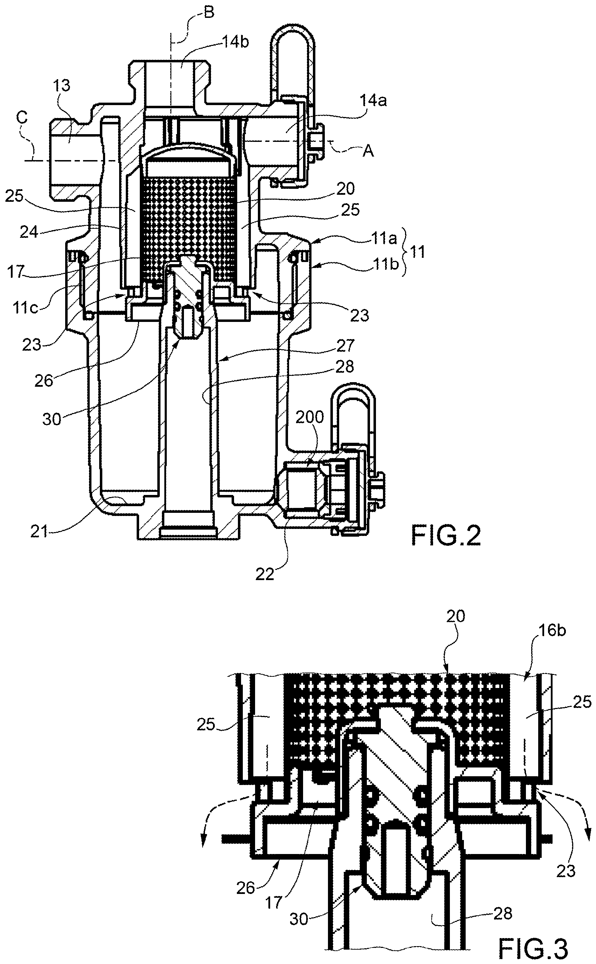

Said closing means may be configured so that, when the slider 30 is in the first configuration, the discharge outlet 23 is closed - as for example shown in Figure 1- and when the slider 30 is in the second configuration, the discharge outlet 23 is open - as for example shown in Figure 2.

The blocking member 26 may be fixed to the slider 30 so as to be moved integrally with the latter between the closed configuration, where the slider 30 is in said first configuration, and the open configuration, where the slider 30 is in said second configuration.

The filtering device 10 may further comprise elastic means designed to exert on the slider 30 and/or on the blocking member 26 a stress suitable for displacing the slider 30 from the second configuration to the first configuration.

In particular, for the movement of the aforementioned slider 30, the closing means may for example comprise a spring, or other elastic element, fixed to the casing 11, for example to the sleeve 27, and interfering with the slider 30 so as to push it into the second configuration, namely so as to oppose its movement into the first configuration.

In general, the filtering device 10 may be configured so that the blocking member 26 tends to keep the discharge outlet 23 open when the magnetic member 18 is not engaged with the casing 11.

For example, when the filtering device 10 is installed so that the direction of extension E is vertical, the blocking member 26 and the slider 30 may tend to keep the discharge outlet open 23 by means of the force of gravity acting on the blocking member 26 and/or on the slider 30.

The slider 30 may be slidable, preferably in a rectilinear direction for the sake of simplicity, relative to the sleeve 27 along the direction of extension E between said first configuration and said second configuration; said sleeve 27 extending in said operating direction F.

The opening and closing of the discharge outlet 23 may, alternatively, be obtained by means of rotation of the blocking member 26 in a manner not shown in the attached figures.

In this case, the blocking member 26 may have at least one through-hole which, following rotation of the blocking member 26, may be aligned with the discharge outlet 23 so as to open it or be offset with respect to the discharge outlet 23 so as to close it.

The filtering device may be configured so that a rotation of the blocking member 26 for opening or closing the discharge outlet 23 can be performed by means of the magnetic member 18 and if necessary by means of rotation thereof.

For example, the operating end 19 of the magnetic member 18 may be configured to engage, directly or indirectly with the blocking member 26, so as to rotate it, when the magnetic member 18 is housed inside the housing 28.

The blocking member 26 and the magnetic member 18 may be rotatable about a common axis of rotation which may be parallel to the direction of extension E of the collar 24.

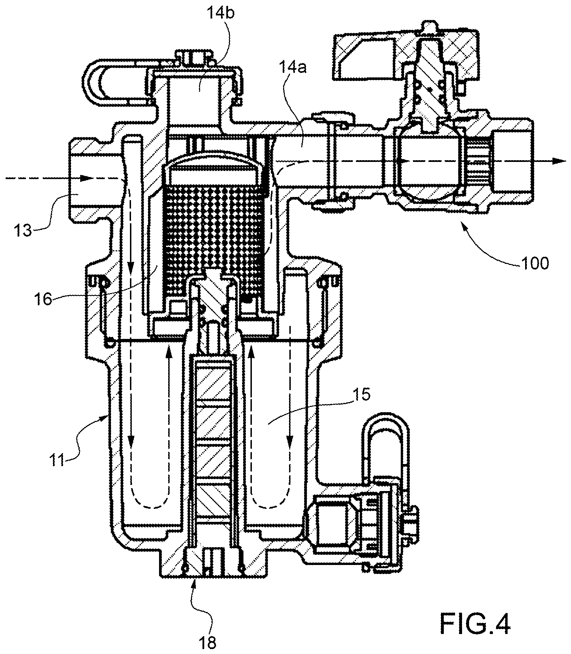

With particular reference to the example of the filtering device 10 shown in the attached figures, Figures 1 and 4 show two possible alternative configurations respectively suitable for installation based on the aforementioned L-shaped configuration and the in-line configuration.

The blocking member 26 may have a substantially disc-shaped form with a central portion designed to engage internally with a bottom, preferably cylindrical edge of the mesh filter 20.

This central portion may be provided with a hole so as to allow the through-flow of liquid from the magnetic filtering chamber 15 to the first part of the mechanical filtering chamber 16 or vice versa.

On the perimeter of said central portion, the blocking element may have a flange designed to engage with the discharge outlet 23 so as to close it.

Below a description is provided for possible operation of a filtering device 10 connected to a hydraulic system in such a way that the liquid to be filtered enters into the filtering device 10 via the first connector 13 and flows out from the second one 14b of the second connectors 14a and 14b.

Clearly, the description below may be applicable, mutatis mutandis, also in the case where the liquid flows out from the first one 14a of the second connectors 14a and 14b, as in the case of the configuration shown in Figure 4, or in the case where it enters via one of the second connectors 14a or 14b and flows out from the first connector 13.

During use, the liquid introduced via the first connector 13 enters into the magnetic filtering chamber 15 and flows along the collar 24 which preferably is cylindrical.

The first connector 13 will be preferably axially offset with respect to the collar 24 so as to induce the liquid to flow along the collar 24 with a circular movement descending towards the bottom wall 21 so as to generate the aforementioned cyclonic progression.

As a result of this cyclonic motion, any heavy particles carried by the liquid flow will tend to accumulate first on the peripheral walls of the magnetic filtering chamber 15 and then descend so as to accumulate on the bottom wall 21.

When the liquid reaches the bottom wall 21 it will tend to move up centrally flowing over the magnetic member.

Any magnetically reactive particles will tend to adhere to the outer surface of the sleeve 27 as a result of the attraction exerted by the magnetic member 18.

The liquid will then enter into the mechanical filtering chamber 16 inside which it will cross the mesh filter 20 which will remove the particles with a size greater than the through-flow openings of the mesh filter 20.

In order to clean the filtering device 10, it is sufficient to close the first faucet 100 in order to prevent the outflow of liquid from the filtering device 10 towards the system to which it is connected.

Following this closing operation, particles which have accumulated in the inner face of the mesh filter 20 will tend to fall into the magnetic filtering chamber 15 and be deposited on the bottom wall 21 of the latter.

Following extraction of the magnetic member 18, particles which have accumulated on the outer surface of the sleeve 27 will tend to become detached from it and collect on the bottom wall 21.

In order to remove the particulate matter which has accumulated inside the magnetic filtering chamber 16 it will be sufficient therefore to open the second faucet 200 so that the liquid, flowing out from the discharge duct 22, carries along with it the particles to be removed.

Moreover, the hydrodynamic effect of the outflowing liquid will also tend to remove any particulate matter still adhering to the sleeve 27 and/or to the bottom wall 21 and/or to other parts of the space 12.

Following the removal of the magnetic member 18, moreover, the blocking member 26 will open the discharge outlet 23, allowing any particles which have accumulated inside the cavity 25 to fall inside the magnetic filtering chamber 15, as indicated for example by the broken-line arrow in Figure 3.

In particular, in the event of operation in the opposite direction to that described here, namely with the entry of liquid via one of the second connectors 14a and with discharging from the first connector 13, there will be a substantial accumulation of particles inside the cavity 25 which, during cleaning (where the first faucet - in this case associated with the first connector 13 - will be closed), will be discharged into the magnetic filtering chamber 15 as a result of opening of the discharge outlet 23 following the displacement of the blocking member 26 into the open configuration, induced by the removal of the magnetic member 18. Therefore, when the discharge duct 22 is opened, the particles discharged from the cavity 25 through the discharge outlet 23 will also be removed.

It has therefore been shown how the present invention is able to fulfil the predefined task and objects.

In fact, with a filtering device according to the present invention it is possible to have a spacious magnetic filtering chamber, without any mesh filter, inside which the particulate matter may accumulate without this hindering the through-flow of liquid through the filtering device.

A filtering device according to the invention not only may be easily connected in an L-shaped configuration or an in-line configuration to a hydraulic system, but may also be used with two opposite possible directions of flow of the liquid, namely from the first connector to one of the second connectors, or vice versa, without affecting its filtering capacity.

In particular, a filtering device according to the present invention will be easy to clean also for a non-expert user since it will not be necessary to open it, but simply to operate the aforementioned faucets and remove, if necessary, the magnetic member, as described more fully above.

Therefore, the simple structure of a filtering device according to the invention is such that device may be manufactured in a simple manner using known plastic moulding techniques and by means of a simple and easy assembly operation.

The invention thus devised may be subject to numerous modifications and variations, all of which fall within the scope of protection of the attached claims.

Moreover all the details may be replaced by other technically equivalent elements.

In practice the materials used as well as the associated forms and dimensions may be varied depending on the particular requirements and the state of the art.

Where the constructional characteristics and the techniques mentioned in the following claims are followed by symbols or reference numbers, these reference numbers or symbols have been assigned with the sole purpose of facilitating understanding of the said claims and consequently they do not limit in any way the interpretation of each element which is identified, purely by way of example, by said reference numbers or symbols.

## Claims

1. Filtering device (10) having a casing (11) which defines a through-flow space (12) for a liquid to be filtered and is provided with at least two connectors (13, 14a 14b) for connection to a pipe, designed to place the latter in fluid communication with said space (12); said space (12) comprising a magnetic filtering chamber (15), which communicates with a first one (13) of said connectors (13, 14a 14b), and a mechanical filtering chamber (16), which communicates with a second one (14a, 14b) of said connectors (13, 14a, 14b) and which has a through-flow opening (17) communicating with said magnetic filtering chamber (15) so that a fluid that crosses said space (12), entering via a first one (13) of the connectors (13, 14a 14b) and flowing out from the second one (14a, 14b) of the connectors (13, 14a 14b), or, vice versa, crosses in succession both said chambers (15, 16);
wherein said magnetic filtering chamber (15) has a magnetic member (18) which extends, with its operating end (19), towards said through-flow opening (17), said magnetic member (18) being designed to emit a magnetic field inside the magnetic filtering chamber (15);
said mechanical filtering chamber (16) houses a mesh filter (20) which divides up said chamber into a first part (16a), communicating with said through-flow opening (17), and a second part (16b), which communicates with said second connector (14a, 14b) so that such a fluid flow passing between said through-flow opening (17) and said connector is forced to cross said mesh filter (20);
wherein the operating end (19) is arranged spaced from said through-flow opening (17) so that an accumulation of particulate matter on said operating end (19) does not hinder the through-flow of liquid from said magnetic filtering chamber (15) to said mechanical filtering chamber (16), across said through-flow opening (17),
**characterized in that** said magnetic filtering chamber (15) has a bottom wall (21), a discharge duct (22) which faces said bottom wall (21) where said magnetic member (18) extends between said bottom wall (21) and said operating end (19) towards said through-flow opening (17);
wherein the second part (16b) of said mechanical filtering chamber (16) has a discharge outlet (23) and said filtering device (10) comprises means for closing said discharge outlet (23) which are configured so that they can be operated from the outside of said filtering device (10) in order to open or close said discharge outlet (23); wherein following opening of said discharge outlet (23), the latter is connected to said magnetic filtering chamber (15) so as to discharge into the latter material which has accumulated in the second part (16b) of said mechanical filtering chamber (16) following filtering by said mesh filter (20).

2. Filtering device (10) according to the preceding claim, wherein said casing (11) comprises a tubular collar (24) which projects inside said space (12); said mesh filter (20) being configured and positioned inside said mechanical filtering chamber (16) so as to define between itself and said tubular collar (24) a cavity (25) having a bottom opening which defines said discharge outlet (23); the second part (16b) of said mechanical filtering chamber (16) comprising said cavity (25);
said closing means comprising a blocking member (26) which is movable between a closed configuration, where it blocks off said discharge outlet (23), and an open configuration, where said discharge outlet (23) connects said cavity (25) to said magnetic filtering chamber (15).

3. Filtering device (10) according to claim 2, wherein said collar (24) extends along a direction of extension (E) and said magnetic member (18) extends along an operating direction (F) which is substantially parallel to said direction of extension (E); said filtering device (10) being configured to be fixed to a pipe of a hydraulic system so that said direction of extension (E) is substantially vertical, said filtering device (10) being moreover configured so that particulate matter which has accumulated inside said cavity (25) may be discharged by means of gravity through said discharge outlet (23) following opening of the latter.

4. Filtering device (10) according to one of the preceding claims, wherein said casing (11) comprises a tubular sleeve (27) projecting inside said magnetic filtering chamber (15) and defining a housing (28) for said magnetic member (18), which is open on the outside of said casing (11); said magnetic member (18) being housed inside said sleeve (27) so as to attract and retain thereon magnetically reactive particles, said magnetic member (18) being able to be extracted from said sleeve (27) in order to free said particles.

5. Filtering device (10) according to claim 4, wherein said sleeve (27) extends from said bottom wall (21) towards said through-flow opening (17); said closing means comprising a slider (30) fixed to said sleeve (27) movably between a first configuration and a second configuration; said slider (30) emerging inside sleeve (27) so as to be operated by means of said magnetic member (18); said sleeve (27), said slider (30) and said magnetic member (18) being configured so that, following insertion of said magnetic member (18) inside said sleeve (27), said slider (30) is arranged in said first configuration and, following extraction of said magnetic member (18) from said sleeve (27), said slider (30) is arranged in said second configuration; said closing means being configured so that when said slider (30) is in said first configuration said discharge outlet (23) is closed and when said slider (30) is in said second configuration said discharge outlet (23) is open.

6. Filtering device (10) according to claims 2 and 5, wherein said blocking member (26) is fixed to said slider (30) so as to be moved integrally therewith between said closed configuration, where said slider (30) is in said first configuration, and said open configuration, where said slider (30) is in said second configuration.

7. Filtering device (10) according to claims 3 and 6, wherein said slider (30) is slidable with respect to said sleeve (27) along said direction of extension (E) between said first configuration and said second configuration; said sleeve (27) extending in said operating direction (F).

8. Filtering device (10) according to claim 6 or 7, which further comprises elastic means designed to exert on said slider (30) and/or on said blocking member (26) a stress suitable for displacing said slider (30) from said second configuration to said first configuration.

9. Filtering device (10) according to claim 8, wherein said magnetic member (18) and said sleeve (27) are configured to be joined together stably in a reversible manner so as to selectively lock said magnetic member (18) inside said sleeve (27) or release it and allow extraction thereof from said sleeve (27).

## Patentansprüche

1. Filtervorrichtung (10), die eine Ummantelung (11) aufweist, die einen Durchflussraum (12) für eine zu filternde Flüssigkeit definiert und mit mindestens zwei Anschlussstücken (13, 14a, 14b) für eine Verbindung zu einem Rohr versehen ist, die ausgelegt sind, um Letztere in Fluidkommunikation mit dem Raum (12) zu bringen; der Raum (12) umfassend eine magnetische Filterkammer (15), die mit einem ersten (13) der Anschlusstücke (13, 14a, 14b) kommuniziert, und eine mechanische Filterkammer (16), die mit einem zweiten (14a, 14b) der Anschlusstücke (13, 14a, 14b) kommuniziert und die eine Durchflussöffnung (17) aufweist, die mit der magnetischen Filterkammer (15) kommuniziert, so dass ein Fluid, das den Raum (12) durchquert, über ein erstes (13) der Anschlusstücke (13, 14a, 14b) eintritt und aus dem zweiten (14a, 14b) der Anschlusstücke (13, 14a, 14b) austritt, oder umgekehrt, nacheinander die beiden Kammern (15, 16) durchquert;
wobei die magnetische Filterkammer (15) ein magnetisches Element (18) aufweist, das sich mit seinem Betriebsende (19) zu der Durchflussöffnung (17) hin erstreckt, wobei das magnetische Element (18) ausgelegt ist, um ein Magnetfeld im Inneren der magnetischen Filterkammer (15) zu emittieren;
die mechanische Filterkammer (16) einen Siebfilter (20) beherbergt, der die Kammer in einen ersten Teil (16a), der mit der Durchflussöffnung (17) kommuniziert, und einen zweiten Teil (16b) unterteilt, der mit dem zweiten Anschlussstück (14a, 14b) kommuniziert, so dass solch ein Fluidfluss, der zwischen der Durchflussöffnung (17) und dem Anschlussstück hindurchgeht, gezwungen wird, den Siebfilter (20) zu durchqueren;
wobei das Betriebsende (19) von der Durchflussöffnung (17) beabstandet angeordnet ist, so dass eine Ansammlung von Schwebstoffteilchen auf dem Betriebsende (19) den Durchfluss von Flüssigkeit von der magnetischen Filterkammer (15) zu der mechanischen Filterkammer (16) über die Durchflussöffnung (17) hinweg nicht behindert,
**dadurch gekennzeichnet, dass** die magnetische Filterkammer (15) eine Bodenwand (21) und einen Abflusskanal (22) aufweist, der der Bodenwand (21) zugewandt ist, wobei sich das magnetische Element (18) zwischen der Bodenwand (21) und dem Betriebsende (19) zu der Durchflussöffnung (17) hin erstreckt;
wobei der zweite Teil (16b) der mechanischen Filterkammer (16) einen Abflussauslass (23) aufweist und die Filtervorrichtung (10) Mittel zum Verschließen des Abflussauslasses (23) umfasst, die konfiguriert sind, um von der Außenseite der Filtervorrichtung (10) betrieben werden zu können, um den Abflussauslass (23) zu öffnen oder zu schließen; wobei, nach dem Öffnen des Abflussauslasses (23), Letzterer mit der magnetischen Filterkammer (15) verbunden ist, um in Letztere ein Material abfließen zu lassen, das sich in dem zweiten Teil (16b) der mechanischen Filterkammer (16) nach dem Filtern durch den Siebfilter (20) angesammelt hat.

2. Filtervorrichtung (10) nach dem vorstehenden Anspruch, wobei die Ummantelung (11) einen rohrförmigen Kragen (24) umfasst, der in den Raum (12) hineinragt; wobei der Siebfilter (20) konfiguriert und im Inneren der mechanischen Filterkammer (16) positioniert ist, um zwischen sich und dem rohrförmigen Kragen (24) einen Hohlraum (25) zu definieren, der eine Bodenöffnung aufweist, die den Abflussauslass (23) definiert; der zweite Teil (16b) der mechanischen Filterkammer (16) umfassend den Hohlraum (25);
die Verschlussmittel umfassend ein Blockierelement (26), das zwischen einer geschlossenen Konfiguration, in der es den Abflussauslass (23) blockiert, und einer offenen Konfiguration, in der der Abflussauslass (23) den Hohlraum (25) mit der Magnetfilterkammer (15) verbindet, bewegbar ist.

3. Filtervorrichtung (10) nach Anspruch 2, wobei sich der Kragen (24) entlang einer Erstreckungsrichtung (E) erstreckt und das magnetische Element (18) sich entlang einer Betriebsrichtung (F) erstreckt, die im Wesentlichen parallel zu der Erstreckungsrichtung (E) ist; wobei die Filtervorrichtung (10) konfiguriert ist, um an einem Rohr eines hydraulischen Systems befestigt zu werden, so dass die Erstreckungsrichtung (E) im Wesentlichen vertikal ist, wobei die Filtervorrichtung (10) außerdem konfiguriert ist, so dass die Schwebstoffteilchen, die sich im Inneren des Hohlraums (25) angesammelt haben, mittels Schwerkraft durch den Abflussauslass (23) hindurch nach dem Öffnen von Letzterem abfließen können.

4. Filtervorrichtung (10) nach einem der vorstehenden Ansprüche, wobei die Ummantelung (11) eine rohrförmige Hülle (27) umfasst, die ins Innere der magnetischen Filterkammer (15) hineinragt und ein Gehäuse (28) für das magnetische Element (18) definiert, das an der Außenseite der Ummantelung (11) offen ist; wobei das magnetische Element (18) im Inneren der Hülle (27) untergebracht ist, um magnetisch reaktive Teilchen anzuziehen und darauf zu halten, wobei das magnetische Element (18) aus der Hülle (27) herausgezogen werden kann, um die Teilchen freizugeben.

5. Filtervorrichtung (10) nach Anspruch 4, wobei sich die Hülle (27) von der Bodenwand (21) zu der Durchflussöffnung (17) hin erstreckt; das Verschlussmittel umfassend einen Schieber (30), der an der Hülle (27) befestigt ist, der zwischen einer ersten und einer zweiten Konfiguration bewegbar ist; wobei der Schieber (30) ins Innere der Hülle (27) verläuft, um mittels dem magnetischen Element (18) betrieben zu werden; wobei die Hülle (27), der Schieber (30) und das magnetische Element (18) konfiguriert sind, so dass, nach einem Einführen des magnetischen Elements (18) ins Innere der Hülle (27), der Schieber (30) in der ersten Konfiguration angeordnet ist und nach einem Herausziehen des magnetischen Elements (18) aus der Hülle (27), der Schieber (30) in der zweiten Konfiguration angeordnet ist; wobei die Verschlussmittel konfiguriert sind, so dass, wenn sich der Schieber (30) in der ersten Konfiguration befindet, der Abflussauslass (23) geschlossen ist, und wenn sich der Schieber (30) in der zweiten Konfiguration befindet, der Abflussauslass (23) offen ist.

6. Filtervorrichtung (10) nach Anspruch 2 und 5, wobei das Blockierelement (26) an dem Schieber (30) befestigt ist, um mit diesem zwischen der geschlossenen Konfiguration, in der sich der Schieber (30) in der ersten Konfiguration befindet, und der offenen Konfiguration, in der sich der Schieber (30) in der zweiten Konfiguration befindet, integral zu werden.

7. Filtervorrichtung (10) nach Anspruch 3 und 6, wobei der Schieber (30) in Bezug auf die Hülle (27) entlang der Erstreckungsrichtung (E) zwischen der ersten Konfiguration und der zweiten Konfiguration verschiebbar ist; wobei sich die Hülle (27) in der Betätigungsrichtung (F) erstreckt.

8. Filtervorrichtung (10) nach Anspruch 6 oder 7, die ferner elastische Mittel umfasst, die ausgelegt sind, um auf den Schieber (30) und/oder auf das Blockierelement (26) eine Spannung auszuüben, die zum Verlagern des Schiebers (30) von der zweiten Konfiguration in die erste Konfiguration geeignet ist.

9. Filtervorrichtung (10) nach Anspruch 8, wobei das magnetische Element (18) und die Hülle (27) konfiguriert sind, um auf umkehrbare Weise stabil miteinander verknüpft zu sein, um das magnetische Element (18) im Inneren der Hülle (27) selektiv zu verriegeln oder es freizugeben und das Herausziehen davon aus der Hülle (27) zu ermöglichen.

## Revendications

1. Dispositif de filtrage (10) ayant un carter (11) qui définit un espace d'écoulement traversant (12) pour un liquide à filtrer et qui est pourvu d'au moins deux raccords (13, 14a 14b) pour le raccordement à un tuyau, conçu pour placer ce dernier en communication fluidique avec ledit espace (12) ; ledit espace (12) comprenant une chambre de filtrage magnétique (15), qui communique avec un premier (13) desdits raccords (13, 14a 14b), et une chambre de filtrage mécanique (16), qui communique avec un second (14a, 14b) desdits raccords (13, 14a, 14b) et qui a une ouverture d'écoulement traversant (17) communiquant avec ladite chambre de filtrage magnétique (15) de sorte qu'un fluide qui traverse ledit espace (12), entrant par le biais d'un premier (13) des raccords (13, 14a 14b) et s'écoulant du second (14a, 14b) des raccords (13, 14a 14b), ou, inversement, traverse successivement les deux chambres (15, 16) ;
dans lequel ladite chambre de filtrage magnétique (15) a un élément magnétique (18) qui s'étend, avec son extrémité d'actionnement (19), vers ladite ouverture d'écoulement traversant (17), ledit élément magnétique (18) étant destiné à émettre un champ magnétique à l'intérieur de la chambre de filtrage magnétique (15) ;
ladite chambre de filtrage mécanique (16) loge un filtre à mailles (20) qui divise ladite chambre en une première partie (16a), communiquant avec ladite ouverture d'écoulement traversant (17), et une seconde partie (16b), qui communique avec ledit second raccord (14a, 14b) de sorte qu'un tel écoulement de fluide passant entre ladite ouverture d'écoulement traversant (17) et ledit raccord est forcé de traverser ledit filtre à mailles (20) ;
dans lequel l'extrémité d'actionnement (19) est agencée espacée de ladite ouverture d'écoulement traversant (17) de sorte qu'une accumulation de matière particulaire sur ladite extrémité d'actionnement (19) ne gêne pas l'écoulement traversant de liquide de ladite chambre de filtrage magnétique (15) à ladite chambre de filtrage mécanique (16), à travers ladite ouverture d'écoulement traversant (17),
**caractérisé en ce que** ladite chambre de filtrage magnétique (15) a une paroi inférieure (21), un conduit d'évacuation (22) qui fait face à ladite paroi inférieure (21) où ledit élément magnétique (18) s'étend entre ladite paroi inférieure (21) et ladite extrémité d'actionnement (19) vers ladite ouverture d'écoulement traversant (17) ;
dans lequel la seconde partie (16b) de ladite chambre de filtrage mécanique (16) a une sortie d'évacuation (23) et ledit dispositif de filtrage (10) comprend des moyens pour fermer ladite sortie d'évacuation (23) qui sont conçus de sorte qu'ils peuvent être actionnés depuis l'extérieur dudit dispositif de filtrage (10) afin d'ouvrir ou de fermer ladite sortie d'évacuation (23) ; dans lequel suite à l'ouverture de ladite sortie d'évacuation (23), cette dernière est raccordée à ladite chambre de filtrage magnétique (15) de sorte à évacuer dans cette dernière du matériau qui s'est accumulé dans la seconde partie (16b) de ladite chambre de filtrage mécanique (16) suite à un filtrage par ledit filtre à mailles (20).

2. Dispositif de filtrage (10) selon la revendication précédente, dans lequel ledit carter (11) comprend un collier tubulaire (24) qui fait saillie à l'intérieur dudit espace (12) ; ledit filtre à mailles (20) étant conçu et positionné à l'intérieur de ladite chambre de filtrage mécanique (16) de sorte à définir entre lui et ledit collier tubulaire (24) une cavité (25) ayant une ouverture inférieure qui définit ladite sortie d'évacuation (23) ; la seconde partie (16b) de ladite chambre de filtrage mécanique (16) comprenant ladite cavité (25) ;
lesdits moyens de fermeture comprenant un élément de blocage (26) qui est mobile entre une configuration fermée, où il bloque ladite sortie d'évacuation (23), et une configuration ouverte, où ladite sortie d'évacuation (23) raccorde ladite cavité (25) à ladite chambre de filtrage magnétique (15).

3. Dispositif de filtrage (10) selon la revendication 2, dans lequel ledit collier (24) s'étend le long d'une direction d'extension (E) et ledit élément magnétique (18) s'étend le long d'une direction d'actionnement (F) qui est sensiblement parallèle à ladite direction d'extension (E) ; ledit dispositif de filtrage (10) étant conçu pour être fixé à un tuyau d'un système hydraulique de sorte que ladite direction d'extension (E) est sensiblement verticale, ledit dispositif de filtrage (10) étant en outre conçu de sorte que de la matière particulaire qui s'est accumulée à l'intérieur de ladite cavité (25) peut être évacuée par gravité à travers ladite sortie d'évacuation (23) suite à l'ouverture de cette dernière.

4. Dispositif de filtrage (10) selon l'une des revendications précédentes, dans lequel ledit carter (11) comprend un manchon tubulaire (27) faisant saillie à l'intérieur de ladite chambre de filtrage magnétique (15) et définissant un logement (28) pour ledit élément magnétique (18), qui est ouvert sur l'extérieur dudit carter (11) ; ledit élément magnétique (18) étant logé à l'intérieur dudit manchon (27) de sorte à attirer et retenir sur celui-ci des particules magnétiquement réactives, ledit élément magnétique (18) pouvant être extrait dudit manchon (27) afin de libérer lesdites particules.

5. Dispositif de filtrage (10) selon la revendication 4, dans lequel ledit manchon (27) s'étend de ladite paroi inférieure (21) vers ladite ouverture d'écoulement traversant (17) ; lesdits moyens de fermeture comprenant un coulisseau (30) fixé audit manchon (27) de façon mobile entre une première configuration et une seconde configuration ; ledit coulisseau (30) débouchant de l'intérieur du manchon (27) de sorte à être actionné au moyen dudit élément magnétique (18) ; ledit manchon (27), ledit coulisseau (30) et ledit élément magnétique (18) étant conçus de sorte que, suite à l'insertion dudit élément magnétique (18) à l'intérieur dudit manchon (27), ledit coulisseau (30) est agencé dans ladite première configuration et, suite à l'extraction dudit élément magnétique (18) dudit manchon (27), ledit coulisseau (30) est agencé dans ladite seconde configuration ; lesdits moyens de fermeture étant conçus de sorte que lorsque ledit coulisseau (30) est dans ladite première configuration ladite sortie d'évacuation (23) est fermée et lorsque ledit coulisseau (30) est dans ladite seconde configuration ladite sortie d'évacuation (23) est ouverte.

6. Dispositif de filtrage (10) selon les revendications 2 et 5, dans lequel ledit élément de blocage (26) est fixé audit coulisseau (30) de sorte à être mû intégralement avec celui-ci entre ladite configuration fermée, où ledit coulisseau (30) est dans ladite première configuration, et ladite configuration ouverte, où ledit coulisseau (30) est dans ladite seconde configuration.

7. Dispositif de filtrage (10) selon les revendications 3 et 6, dans lequel ledit coulisseau (30) peut coulisser par rapport audit manchon (27) le long de ladite direction d'extension (E) entre ladite première configuration et ladite seconde configuration ; ledit manchon (27) s'étendant dans ladite direction d'actionnement (F).

8. Dispositif de filtrage (10) selon la revendication 6 ou 7, qui comprend en outre des moyens élastiques conçus pour exercer sur ledit coulisseau (30) et/ou sur ledit élément de blocage (26) une contrainte adaptée pour déplacer ledit coulisseau (30) de ladite seconde configuration à ladite première configuration.

9. Dispositif de filtrage (10) selon la revendication 8, dans lequel ledit élément magnétique (18) et ledit manchon (27) sont conçus pour être reliés ensemble de façon stable de manière réversible de sorte à verrouiller de façon sélective ledit élément magnétique (18) à l'intérieur dudit manchon (27) ou à le libérer et permettre l'extraction de celui-ci dudit manchon (27).
